# FASCICULE DE BREVET EUROPEEN

(11) **EP 2 780 173 B1**
(45) Date de publication et mention de la délivrance du brevet: **19.10.2016**
(21) Numéro de dépôt: 12801639.1
(22) Date de dépôt: 13.11.2012
(51) Int. Cl.: B42D 25/333, B42D 25/382, B42D 25/387, B42D 25/346, B42D 25/351

(54) **STRUCTURE MULTICOUCHE, ET DOCUMENT DE SÉCURITÉ ET PROCÉDÉ D'AUTHENTIFICATION ASSOCIÉS**
MEHRSCHICHTIGE STRUKTUR, UND SICHERHEITSDOKUMENT UND ECHTHEITSPRÜFUNG DAZU
MULTILAYER STRUCTURE, AND ASSOCIATED SECURITY DOCUMENT AND AUTHENTIFICATION METHOD

(30) Priorité: 14.11.2011 FR 1160344
(43) Date de publication de la demande: 24.09.2014
(73) Titulaire: Arjowiggins Security, 92100 Boulogne Billancourt (FR)
(72) Inventeur: LE LOARER, Thibault, F-38260 Pommier De Beaurepaire (FR)
(74) Mandataire: Nony
(86) Numéro de dépôt international: PCT/IB2012/056390
(87) Numéro de publication internationale: WO 2013/072849

(56) Documents cités:
- WO-A1-2011/073944
- FR-A1- 2 948 218

## Description

La présente invention se rapporte au domaine des documents ou autres articles de sécurité. Elle concerne plus particulièrement mais non exclusivement les structures multicouches pouvant constituer ou être intégrées dans un document de sécurité.

### Arrière-plan

Pour sécuriser un document, il est connu d'utiliser des éléments de sécurité dits « de premier niveau » qui comportent des éléments de sécurité détectables à l'oeil nu en lumière visible et sans utilisation d'un appareil particulier et/ou des éléments de sécurités dits « de deuxième niveau » qui sont détectables seulement à l'aide d'un appareil relativement simple telle qu'une lampe émettant dans l'ultraviolet ou l'infrarouge. Il peut encore parfois s'avérer souhaitable d'utiliser des éléments de sécurité dits « de troisième niveau », capables de générer un signal spécifique lorsque soumis à une excitation optoélectronique, électrique, magnétique ou encore électromagnétique.

Des structures multicouches sont connues des publications EP 2 116 366 A1 ou WO 2011/072818 A1.

Des cartes à dispositif RFID en matière plastique, comprenant uniquement des couches polymères, sont connues et présentent peu ou pas de sécurités d'authentification, notamment visuelle, si ce n'est des impressions de sécurité, embossages de surface ou des hologrammes appliqués par transfert, comme celui commercialisé par la société Hologram Industries sous la marque DID.

Il est relativement facile pour un fraudeur de se procurer des cartes vierges en plastique et de reproduire les impressions, personnalisations et sécurités visuelles présentes sur une carte authentique en plastique.

Plus récemment, des éléments réfléchissants métalliques sur lesquels est gravé un micromotif et incorporés dans une couche en polycarbonate ont été commercialisés par la société BAYER sous la marque PROTEXXION. Les éléments sont identifiables visuellement seulement à l'aide d'un microscope, et il n'existe pas de sécurité apportée par la structure de la carte elle-même.

Il existe un besoin pour bénéficier de structures multicouches offrant des garanties de sécurité suffisantes et permettant de produire, si cela est recherché, de nouveaux effets visuels pour l'observateur cherchant à authentifier le document de sécurité.

Il est également connu d'utiliser comme moyen de sécurité dans les documents de sécurité des filigranes qui permettent d'authentifier un document par observation en lumière transmise.

Les filigranes permettent de protéger de la copie par des moyens optiques tels que la photocopie, la photographie ou la numérisation.

Les filigranes peuvent également être utilisés à des fins décoratives et de prestige, notamment pour les papiers impression-écriture, par exemple pour les têtes de lettres ou des papiers d'art comme les papiers pour aquarelle.

La présente invention concerne également les documents de sécurité sous forme de livret, par exemple tel qu'un livret de passeport, comportant généralement une couverture et une ou plusieurs feuilles intérieures, par exemple au moins seize feuilles dans le cas d'un livret de passeport.

Pour permettre de sécuriser de tels documents, notamment contre les tentatives de falsifications et/ou de contrefaçons, ceux-ci comportent le plus souvent au moins une page d'une feuille intérieure qui comporte des données de sécurité, par exemple des données personnelles imprimées ou gravées, et éventuellement une photographie relative au porteur du document à volets. Pour améliorer davantage la sécurisation, ces données peuvent être recouvertes d'un film de protection holographique. En outre, pour permettre l'authentification d'un tel document et rendre plus difficile une tentative de contrefaçon, le livret peut encore comporter un ou plusieurs éléments de sécurité bien connus, tel qu'un filigrane ou pseudo-filigrane, un dispositif à microcircuit intégré, entre autres, ces éléments de sécurité pouvant notamment être imprimés sur une ou plusieurs pages des feuilles intérieures et/ou intégrés à celles-ci.

La demande internationale WO 2007/034129 décrit un document comportant une couverture et une feuille intérieure présentant une page de données sécurisées. La page de données comporte notamment une couche sur laquelle figure des données personnelles visibles relatives au porteur du document et une autre couche comportant un dispositif électronique dans lequel est stocké tout ou partie de ces données personnelles, les deux couches étant laminées entre deux autres couches en plastique. Un tel document présente plusieurs inconvénients, notamment en ce qu'il est quasiment impossible de pouvoir personnaliser le document après fabrication. En effet, la présence de couches en plastique rend difficile la personnalisation physique de la page de données du livret avec des impressions de données visibles après le montage du livret. De plus, il s'avère également difficile de personnaliser numériquement le document avec un enregistrement de tout ou partie de données personnelles dans la puce simultanément à la personnalisation physique du document par des impressions visibles de ces données.

Il est par ailleurs connu d'utiliser des composés luminescents dans les documents de sécurité, visibles sous illumination UV ou IR. Une combinaison de couches luminescentes est même proposée dans la publication WO 2006/051231. Par exemple, un support transparent est revêtu sur ses faces opposées de couches métalliques partiellement démétallisées, elles-mêmes recouvertes par des couches fluorescentes émettant des couleurs différentes lorsqu'excitées, ce qui permet de générer une troisième couleur dans les régions où les couches fluorescentes se superposent.

FR 2 948 218 divulgue une structure multicouche selon le préambule de la revendication 1, ou une image combinée superposée à une trame de révélation, situées de chaque côté d'un substrat transparent ou translucide. La trame ou l'image combinée peuvent comporter des éléments optiques, magnétiques ou de métallisation. Parmi de nombreuses autres possibilités, la trame de révélation et l'image combinée peuvent comporter chacune une zone de fluorescence.

WO 2011/073944 divulgue une structure multicouche comportant une couche luminescente et un filigrane.

Il existe un besoin pour améliorer encore la protection des documents de sécurité et/ou de valeur contre la falsification.

La présente invention vise notamment à répondre à ce besoin. L'invention a pour objet, selon un premier de ses aspects, une structuré multicouche comportant :
- un premier élément de sécurité, notamment un filigrane ou pseudo-filigrane,
- une structure diffusante, encore appelée sous-structure intercalaire dans certains exemples de réalisation ci-après, comportant une région diffusante se superposant au moins partiellement au premier élément de sécurité,
- une première couche luminescente capable d'émettre, lorsqu'elle est soumise à un rayonnement d'excitation prédéfini, notamment UV ou IR, une lumière visible d'une première couleur (C1), la première couche luminescente s'étendant au moins partiellement entre le premier élément de sécurité et la première couche luminescente, la première couche luminescente se superposant au moins partiellement au premier élément de sécurité. Le premier élément de sécurité n'est observable en lumière transmise, à travers la structure, que lorsqu'elle est soumise au rayonnement d'excitation prédéfini et/ou observée en lumière blanche, que de la face de la structure située du même côté que ce premier élément de sécurité.

L'invention permet d'obtenir des effets différents selon le côté d'incidence de la lumière d'excitation, et notamment de faire ressortir visuellement différemment l'élément de sécurité selon que la lumière d'excitation atteint la couche luminescente en ayant traversé ou non la région diffusante.

Le fait que la première couche émette une lumière d'une première couleur à un emplacement donné n'exclut pas que celle-ci puisse émettre avec une autre couleur à un autre emplacement, la formulation de la première couche pouvant varier d'un emplacement à l'autre, notamment lorsque la première couche est formée par application de compositions de formulation différentes produisant des couleurs différentes de façon à générer un motif d'ensemble poly chromatique.

En particulier, dans le cas d'une couche luminescente fluorescente sous UV ou IR et d'un élément de sécurité constitué par un filigrane, l'effet obtenu peut être que, d'un côté, le filigrane est visible puis invisible lorsque l'on change le rayonnement d'excitation UV ou IR de côté, car la région diffusante atténue le rayonnement UV ou IR d'excitation en le diffusant suffisamment au point que la couche luminescente n'émet pas ou plus suffisamment de lumière visible pour éclairer le filigrane.

La première couche luminescente peut comporter un motif mono ou poly chromatique ; par « poly chromatique » on entend qu'il est capable d'émettre, lorsqu'il est soumis au rayonnement d'excitation prédéfini, notamment UV ou IR, une lumière visible de plusieurs couleurs selon les zones du motif.

Dans le cas d'un filigrane ou pseudo-filigrane comme premier élément de sécurité, le motif peut reproduire le motif du filigrane ou pseudo-filigrane.

Le motif peut être disposé au repère du premier élément de sécurité, notamment filigrane ou pseudo-filigrane, voire disposé de façon repérée par rapport à une zone claire dudit filigrane ou pseudo-filigrane.

Une telle structure présente l'avantage de combiner une sécurité observable en lumière visible, notamment un filigrane, et une image cachée, non visible à l'oeil nu, notamment une image UV. Ce type de structure est facilement identifiable lorsque l'élément de sécurité et la couche luminescente reprennent des motifs similaires observables en lumière blanche, respectivement en lumière d'excitation prédéfinie.

Selon un exemple de réalisation, le motif de la couche luminescente comporte une réduction ou un agrandissement d'un motif de l'élément de sécurité, et représente par exemple le même objet, monument, personnage, végétal ou animal.

Selon un autre exemple de réalisation, les deux motifs sont identiques mais placés de façon symétrique.

Les motifs de l'élément de sécurité et de la couche luminescente peuvent être différents. En particulier les motifs peuvent être complémentaires, dans leur effet visuel ou par rapport à un concept ou une image. On peut par exemple, avoir un filigrane ou pseudo-filigrane représentant un emblème national, une Marianne, et comme motif caché appartenant à la couche luminescente, un autre emblème national différent du premier, par exemple une carte de France, ou encore un texte.

La structure multicouche peut comporter, outre le premier élément de sécurité, qui est de préférence un filigrane ou pseudo-filigrane :
- un deuxième élément de sécurité, de préférence un filigrane ou pseudo-filigrane,
- une deuxième couche luminescente, de formulation différente de la première, capable d'émettre, lorsqu'elle est soumise au rayonnement d'excitation prédéfini, une lumière visible d'une deuxième couleur différente de la première, la deuxième couche luminescente se superposant au moins partiellement au deuxième élément de sécurité.

De préférence, la structure diffusante est située entre les première et deuxième couches luminescentes, sa région diffusante se superposant de préférence au moins partiellement avec les couches luminescentes et avec les éléments de sécurité. Dans une variante, les première et deuxième couches luminescentes se superposent chacune à une région diffusante de la structure diffusante mais ne se superposent pas entre elles.

La diffusion de la lumière par la structure diffusante peut permettre d'avoir un effet dit « Dual watermark » qui réside dans le fait que de chaque côté de la structure multicouche, seul l'élément de sécurité situé de ce côté par rapport à la structure diffusante est essentiellement visible en lumière transmise, dans des conditions usuelles d'observation.

La structure diffusante peut jouer en plus ici un effet d'atténuation du rayonnement d'excitation qui produit l'effet supplémentaire mentionné ci-dessus, qui empêche que les deux couches luminescentes ne soient excitées en même temps. Cet effet est appelé « Dual fluo ».

La région diffusante permet de diffuser le rayonnement d'excitation incident et d'éviter, lorsque la région diffusante est située entre l'élément de sécurité et la couche luminescente, qu'un rayonnement d'excitation incident provenant du même côté que l'élément de sécurité n'excite la couche luminescente et, lorsque la couche luminescente est située entre la région diffusante et l'élément de sécurité, qu'un rayonnement d'excitation incident provenant du côté de la région diffusante n'excite la couche luminescente.

L'invention permet d'obtenir des effets visuels attractifs si on le souhaite et d'améliorer la sécurisation par la construction de la structure multicouche.

L'invention fournit une structure multicouche intégrant des éléments de sécurité de niveau 1 et de niveau 2. Ceci rend très difficile la contrefaçon d'un document de sécurité comportant une telle structure, par exemple une carte, et rend quasiment impossible sa falsification.

L'invention permet en particulier de fournir des sécurités de niveau 1 et 2 intégrées à la structure d'une carte d'identité, un permis de conduire, une carte de paiement, un passeport ou un billet de banque.

La sécurisation est apportée par la structure elle-même, et non par des impressions de sécurité ou des patchs, par exemple holographiques.

La sécurisation est très difficile à contrefaire car elle nécessite des moyens techniques industriels, par exemple une machine à papier à forme ronde pour les filigranes lorsque les éléments de sécurité sont des filigranes.

Le premier et/ou le deuxième élément de sécurité peut être un filigrane ou pseudo filigrane ou une animation.

Le premier élément de sécurité peut comporter une image codée qui n'est appréhendable qu'à travers une trame de révélation, l'image codée comportant par exemple des images entrelacées produisant, lorsqu'observées à travers une trame de révélation, avec un changement de la direction d'observation ou un mouvement relatif de la trame et de l'image, une séquence animée. Des exemples de telles sécurités sont divulgués dans les publications FR 2 940 179, FR 2 948 216, FR 2 948 217 et FR 2 948 218 de la demanderesse. L'élément de sécurité peut encore comporter un dépôt métallique comportant des zones démétallisées.

Le premier et/ou le deuxième élément de sécurité peut être visible soit par réflexion, soit par transmission, soit par transmission et mouvement selon l'un des axes de la structure multicouche. Le mouvement de la trame permet de révéler l'image et de créer une animation.

Le fait que les couches luminescentes se superposent dans certains exemples de mise en oeuvre de l'invention, peut être mis à profit si cela est recherché pour utiliser l'une des couches pour contribuer à bloquer le rayonnement d'excitation qui est incident depuis une face de la structure, et empêcher que l'autre couche luminescente ne soit excitée. On évite ainsi d'exciter les deux couches simultanément en éclairant une seule face de la structure et l'on peut visualiser les éléments de sécurité avec l'une seulement à la fois des couleurs produites par excitation des couches luminescentes.

Pour réaliser la structure diffusante, et notamment sa région diffusante, on peut utiliser une matière non opaque au rayonnement d'excitation mais diffusant celui-ci. Cela permet d'atténuer la quantité de rayonnement d'excitation (IR ou UV) qui va traverser totalement la sous structure. En lumière du jour, on peut observer un effet Dual watermark classique, comme mentionné ci-dessus.

Les couches luminescentes sont de préférence transparentes en lumière du jour et l'on utilise de préférence des pigments invisibles sous lumière du jour et visibles sous excitation.

On peut avoir au moins un ajour dans l'une au moins des couches luminescentes, notamment dans la première couche luminescente, de façon par exemple à avoir un effet de damier en fluorescence.

On peut avoir au moins un ajour dans l'une au moins des couches luminescentes, notamment dans la première couche luminescente, et une structure diffusante qui soit luminescente d'une autre couleur.

On peut envisager une structure diffusante colorée, de faible saturation, pour ne pas bloquer la lumière transmise et ne pas perdre l'effet Dual watermark; si la structure diffusante est colorée, les deux filigranes de l'effet Dual watermark sous lumière du jour seront colorés ; cette couleur peut se combiner avec la couleur résultant de l'excitation des couches luminescentes.

La première couche luminescente peut être distincte d'une couche portant le premier élément de sécurité, notamment une couche fibreuse, l'élément de sécurité étant alors de préférence un filigrane. En variante, la première couche luminescente peut être au moins partiellement, voire entièrement, confondue avec une couche portant l'élément de sécurité, étant par exemple un composé présent dans la masse d'une couche fibreuse, l'élément de sécurité étant par exemple un filigrane réalisé dans cette couche fibreuse.

L'invention a encore pour objet un procédé d'authentification d'une structure multicouche selon l'invention, comportant les étapes suivantes :
- observer en transmission la structure multicouche en éclairant du côté opposé au premier élément de sécurité avec le rayonnement d'excitation provoquant la luminescence de la première couche luminescente et une lumière visible, et en observant du côté du premier élément de sécurité,
- observer en réflexion la structure en éclairant du même côté que le premier élément de sécurité avec ledit rayonnement d'excitation et une lumière visible et en observant du côté du premier élément de sécurité,
- générer une information concernant l'authenticité en comparant les aspects du premier élément de sécurité sous les différentes conditions d'observation ci-dessus.

### Filigrane ou pseudo-filigrane/Couche(s) fibreuse(s)

La structure multicouche selon l'invention peut comporter au moins une couche fibreuse qui peut porter un filigrane ou pseudo-filigrane et, de préférence, la structure comporte deux couches fibreuses portant chacune un filigrane ou pseudo-filigrane.

La couche fibreuse peut comporter un ou plusieurs jets fibreux assemblés, notamment par contrecollage ou par assemblage en partie humide de la machine à papier lors de la fabrication de ladite couche fibreuse.

Les filigranes sont classiquement obtenus lors de la fabrication d'une feuille de papier en phase humide par le dépôt de la pâte à papier sur la toile embossée d'une machine à papier à forme ronde, la quantité de pâte déposée étant plus élevée dans les creux et moindre sur les bosses par rapport au reste du papier.

Les filigranes peuvent aussi être réalisés par embossage d'une feuille humide par un rouleau filigraneur (appelé aussi « dandy roll ») sur une machine à papier à table plate.

Il est par ailleurs connu de réaliser des pseudo-filigranes sur une feuille de papier. Les pseudo-filigranes reproduisent l'apparence d'un filigrane en présentant des différences d'opacité. Ces pseudo-filigranes peuvent être obtenus mécaniquement par apport de pression avec ou sans chaleur et/ou chimiquement par application d'une composition, par exemple en augmentant localement la transparence du papier grâce à des substances adéquates. La densité de matière fibreuse entre les zones les plus claires et les plus sombres du pseudo-filigrane peut être uniforme à la différence d'un filigrane conventionnel.

Le pseudo-filigrane peut être produit dans la couche fibreuse finie par des moyens mécaniques et/ou chimiques par application de certains produits, le motif étant toujours visible en transparence.

Le pseudo-filigrane peut par exemple être réalisé en déposant ou en imprimant dans des zones déterminées de la couche fibreuse une composition qui modifie la transparence de la couche fibreuse, notamment afin de réaliser des zones claires et des zones sombres, semblables à celles d'un filigrane, sans toutefois obtenir un résultat permettant d'obtenir des finesses et des variantes de luminosité comparables à celles d'un filigrane classique.

On peut par exemple rendre transparente la couche fibreuse finie en appliquant dans des zones déterminées, par exemple une composition généralement grasse qui rend transparente la couche fibreuse de façon permanente, comme par exemple une composition faite d'huile et de matériau minéral transparent comme décrit dans le brevet US 2 021 141 ou comme par exemple une composition sous forme d'une cire combinée à un solvant comme décrit dans le brevet US 1 479 337.

On peut aussi rendre transparente la couche fibreuse finie en appliquant localement une cire par transfert à chaud, comme décrit dans le brevet US 5 118 526.

On peut encore utiliser une couche fibreuse comportant une matière thermofusible, par exemple du polyéthylène comme décrit dans le brevet EP 0 203 499, qui sous l'action locale de la chaleur verra sa transparence varier.

On peut opacifier la couche fibreuse finie, sans toutefois la rendre complètement opaque, en appliquant dans des zones déterminées un agent opacifiant qui augmente l'opacité de la couche fibreuse, comme par exemple décrit dans la demande de brevet FR 2 353 676.

L'agent opacifiant peut par exemple être une suspension aqueuse d'un pigment ou d'une charge ou une solution d'un composé chimique, d'un composé coloré ou d'une teinture. Cet agent peut être appliqué pendant la fabrication de la couche fibreuse, sur la nappe fibreuse, et avant son enlèvement de la toile, de sorte que l'agent pénètre dans les interstices de la nappe et provoque une modification de l'opacité de la nappe à traiter dans des zones choisies, après séchage. Cette technique de fabrication a l'inconvénient de nécessiter des dispositifs spéciaux de rouleaux pour appliquer l'agent, et d'employer de préférence un dispositif d'aspiration pour faire pénétrer l'agent dans les interstices de la nappe.

On peut encore réaliser un pseudo-filigrane selon le procédé décrit dans le document W. WALENSKI, « Watermarks and Those that Are Not », Druckspiegel 52, n°3 : 66-68 (March 1997). Ce document décrit un procédé de fabrication d'un pseudo-filigrane sur un papier non couché, comportant l'application sous chaleur et pression d'une pièce de marquage, représentant le motif du pseudo-filigrane, sur une feuille de papier remouillé.

La demande internationale WO 97/17493 décrit également la fabrication de papier couché comportant des pseudo-filigranes résultant d'une variation du poids de couche appliqué dans des zones déterminées, ce qui induit une variation d'épaisseur et d'opacité dans les zones où le poids de couche est réduit ou augmenté.

La demande internationale WO 1999/014433 décrit également un autre procédé de fabrication d'un pseudo-filigrane sur un papier couché, qui prévoit de réaliser une image dans le papier après l'étape de séchage qui suit la dernière opération de couchage, en effectuant les étapes dans lesquelles on applique une solution de remouillage sur au moins une face du papier couché, dans une ou plusieurs zones déterminées, et on applique une pression et une chaleur dans la ou les zones du papier couché remouillé de manière à évaporer la solution et densifier le papier couché dans la ou les zones par rapport au reste du papier.

Le pseudo-filigrane peut enfin être réalisé par voie mécanique en réalisant des marques par embossage mécanique de zones déterminées de la couche fibreuse comme décrit dans le brevet DE 3 718 452.

Le filigrane ou pseudo-filigrane de chaque couche fibreuse peut n'être visible au moins partiellement que depuis la face apparente de la couche fibreuse le comportant, notamment au niveau de la région translucide de la sous-structure.

La ou les couches fibreuses peuvent être réalisées sur une machine à papier à table plate ou à forme ronde, et les filigranes peuvent être incorporés à la ou aux couches fibreuses en partie humide selon les procédés classiques connus de l'homme du métier.

La ou les couches fibreuses peuvent encore être réalisées sur une machine à papier à table plate ou à forme ronde, et les pseudos filigranes peuvent être réalisés sur les couches finies par des moyens mécaniques ou chimiques selon les procédés classiques connus de l'homme du métier.

Au moins une couche fibreuse peut comporter des impressions, notamment de personnalisation, réalisées, par exemple en offset, par héliogravure, sérigraphie ou flexographie, en taille douce, par typographie, par laser ou jet d'encre. Les impressions peuvent par exemple correspondre à des mentions fixes et/ou aux mentions variables d'un document d'identité. Les impressions peuvent comporter une photographie, par exemple celle du titulaire du document.

Au moins une couche fibreuse peut par exemple être à base de papier du type LASERGUARD^{®} ou JETGUARD^{®}, commercialisés par la société ARJOWIGGINS.

Au moins une couche fibreuse peut être colorée, fluorescente, iridescente ou présenter tout autre nuance ou effet optique.

La couche fibreuse peut être luminescente, notamment fluorescente, auquel cas la couche luminescente se confond avec la couche fibreuse. Si la couche fibreuse est luminescente, l'effet est moins visible qu'avec une couche luminescente additionnelle sous le filigrane, mais cela présente l'avantage de supprimer une étape du procédé industriel.

Si la couche est colorée, la couleur est de préférence faiblement intense pour ne pas perdre l'effet Dual watermark et ne pas trop atténuer l'effet dit Dual fluo ; si la couche est iridescente, il y a une augmentation plus importante de l'opacité.

Au moins une couche fibreuse peut être à base de fibres cellulosiques, par exemple des fibres de coton, et/ou de fibres synthétiques et/ou de fibres organiques naturelles autres que cellulosiques et/ou de fibres minérales.

Au moins une couche fibreuse peut présenter un grammage compris entre 60 et 220 g/m², de préférence entre 50 et 120 g/m².

Au moins une couche fibreuse peut avoir une épaisseur comprise entre 60 et 220 µm, de préférence entre 70 et 110 µm, par exemple d'environ 100 µm.

Les premier et second éléments de sécurité, notamment les premier et second filigranes ou pseudo-filigrane, les première et deuxième couches luminescentes et la région diffusante de la structure diffusante peuvent se superposer au moins partiellement.

Les premier et second éléments de sécurité peuvent se superposer exactement.

### Couche luminescente

La première et/ou la deuxième couche luminescente peut être une impression.

L'impression peut reproduire un motif de l'élément de sécurité, en particulier d'un filigrane ou pseudo filigrane.

La première et/ou la deuxième couche luminescente peut comporter une encre luminescente appliquée en aplat.

Dans une variante, la première et/ou la deuxième couche luminescente est agencée pour produire un motif lumineux poly chromatique, visible sous exposition au rayonnement d'excitation prédéfini.

Le rayonnement d'excitation prédéfini peut correspondre à un éclairage ultraviolet, notamment de longueur d'onde proche du visible, par exemple voisin de 365 nm. En variante, le rayonnement d'excitation prédéfini correspond à un éclairage infrarouge.

L'une au moins des première et deuxième couches luminescentes peut être une couche fluorescente. La fluorescence se verra par réflexion ou par transmission selon les agencements. Par exemple, la même couleur pourra être observable par réflexion sur la face éclairée et par transmission sur la face non éclairée grâce à la structure diffusante qui permet de diffuser le rayonnement d'excitation et éviter que les couches luminescentes ne soient excitées simultanément. De préférence, il n'y a pas transmission des UV ou IR à travers la structure multicouche, au moins dans la zone se superposant à la région diffusante, laquelle peut s'étendre à toute l'étendue de la structure multicouche.

Dans des exemples de mise en oeuvre de l'invention comportant deux couches fibreuses et deux couches luminescentes, notamment fluorescentes, disposées de part et d'autre d'une structure diffusante, en cas d'excitation depuis la face définie par la première couche fibreuse de la structure multicouche, la première couche luminescente absorbe une grande partie de ce rayonnement et émet un rayonnement visible. Ce rayonnement visible est transmis pour partie à la deuxième couche fibreuse, car une partie est perdue par diffusion à travers la région diffusante notamment; le reste du rayonnement d'excitation qui a traversé la première couche luminescente est diffusé dans la structure diffusante et sensiblement aucun rayonnement d'excitation ne parvient à la seconde couche luminescente, de sorte que l'observateur ne perçoit pas d'émission de lumière visible par cette deuxième couche luminescente.

L'une au moins des première et deuxième couches luminescentes peut être une couche phosphorescente.

Les première et deuxième couches luminescentes peut être fluorescentes, respectivement phosphorescentes.

L'une des première et deuxième couches luminescentes peut être phosphorescente et l'autre fluorescente.

### Structure diffusante

La structure diffusante, au sens de l'invention, est une structure qui occupe dans son ensemble une certaine place dans l'épaisseur de la structure multicouche et qui comporte une région diffusante, qui peut ou non s'étendre à toute l'étendue de la structure diffusante. Ainsi, hors de la région diffusante, la structure diffusante peut présenter des propriétés optiques quelconques, notamment non diffusantes, par exemple être opaque ou transparente. Dans des exemples de mise en oeuvre de l'invention, la région diffusante s'étend à l'ensemble de la structure, laquelle est alors, par exemple, définie par un substrat de composition homogène. De préférence, la structure diffusante est réalisée de manière à avoir l'effet « Dual watermark » et l'effet « Dual fluo ».

La structure diffusante, encore appelée sous-structure intercalaire lorsqu'elle se situe entre deux couches, notamment externes, de la structure multicouche, peut ainsi comporter une région translucide ou être translucide sur toute sa surface.

La structure diffusante peut comporter une région translucide et/ou diffusant la lumière ou être translucide et/ou diffuser la lumière sur toute sa surface.

On entend par « translucide » le fait que la région de la structure laisse passer assez de lumière visible pour voir à travers la structure.

On entend par « diffusant », le fait que la structure diffusante, dans sa région diffusante, diffuse la lumière visible et d'excitation, du fait de sa nature et de son épaisseur. En particulier la région diffusante est non-opaque, vis-à-vis de la lumière visible notamment.

De préférence, l'intensité du rayonnement d'excitation prédéfini est atténuée d'au moins 80 % par diffusion à la traversée de la région diffusante.

Le caractère diffusant de la lumière de la région diffusante, notamment du substrat qui la définit, peut provenir de son indice de réfraction, de sa composition, de son épaisseur et/ou aussi de ses irrégularités de surface.

Plus particulièrement, le caractère diffusant peut être tel que la structure multicouche présente l'effet « Dual fluo ». Par exemple, l'indice de réfraction de la région diffusante peut contribuer à conférer des propriétés de diffusion de la lumière, en particulier du rayonnement d'excitation prédéfini, suffisantes pour que la structure multicouche présente l'effet « Dual fluo ». La structure diffusante peut comporter des charges minérales ou organiques, des bulles, des cavitations lui conférant un caractère diffusant.

Le caractère diffusant peut être lié à l'emploi d'un substrat particulier pour réaliser la structure diffusante ou au moins l'une des couches de celle-ci.

Selon un cas particulier, les irrégularités de surface de la région diffusante et plus particulièrement du substrat qui la définit sont obtenues par embossage ou grainage de cette surface.

Selon un autre cas particulier, le substrat comporte des cavitations lui conférant un caractère diffusant, par exemple des bulles.

Selon un autre cas particulier, le substrat comporte une charge diffusante choisie en particulier parmi les pigments minéraux, en particulier du kaolin ou du dioxyde de titane, et les pigments organiques, en particulier des billes de polystyrène ou de polyuréthane.

La structure diffusante peut avoir une épaisseur comprise entre 10 et 1000 µm, de préférence entre 250 et 350 im.

La région diffusante a de préférence la même épaisseur que le reste de la structure diffusante.

La région diffusante peut par exemple occuper plus de 10 %, mieux 50 %, encore mieux 90 %, du volume correspondant à la structure diffusante.

La structure diffusante peut être monocouche ou multicouche, pouvant comporter une ou plusieurs couches fibreuses et/ou polymères.

Les couches peuvent être constituées de matériaux identiques ou différents, par exemple tels que ceux cités ci-après pour la structure diffusante.

La structure diffusante, notamment la sous-structure intercalaire, peut comporter une couche fibreuse, par exemple à base de fibres végétales, par exemple de cellulose, en particulier des fibres de coton, et/ou de fibres synthétiques comme par exemple des fibres de polyamide et/ou de polyester.

La couche fibreuse peut être un papier, par exemple un papier calque.

La structure diffusante peut comporter une couche d'un matériau thermoplastique, par exemple de polyéthylène (PE), de polychlorure de vinyle (PVC), de polyéthylène téréphtalate (PET), de polycarbonate (PC), de polylactique acide (PLA) de polyester carbonate (PEC), de polyéthylène téréphtalate glycol (PETG) ou d'acrylonitrile butadiène styrène (ABS), par exemple sous forme d'un film ou d'une couche extrudée.

La structure diffusante peut être composite et comporter au moins une couche polymère et une couche fibreuse, chaque couche étant par exemple choisie(s) parmi les matériaux mentionnés précédemment.

La structure diffusante peut présenter un agencement du type PAPERLAM^{®} commercialisé par la société AROWIGGINS, avec au moins une couche visant à compenser l'épaisseur d'un élément intégré à la structure.

La structure diffusante, notamment lorsqu'elle forme une sous-structure intercalaire, peut comporter une ou plusieurs couches assemblées à l'aide d'une ou plusieurs couches adhésives, par exemple telles que définies ci-après, ou bien encore sans adhésif, par fusion ou par soudure.

La structure diffusante peut être un film plastique transparent recouvert d'un matériau ayant un haut pouvoir diffusant, par exemple des nanoparticules.

L'épaisseur et la nature des couches de la structure diffusante, notamment la sous-structure intercalaire, sont avantageusement choisies de façon à ce que la structure diffusante, en particulier dans la région diffusante, notamment translucide, présente les propriétés de non opacité et de diffusion souhaitées, de manière à obtenir l'effet « Dual watermark », c'est-à-dire empêcher une combinaison des filigranes ou pseudo-filigranes des couches fibreuses lors d'une observation en lumière blanche transmise de la structure.

La structure diffusante, et notamment sa région diffusante, peut s'étendre sur toute la surface du ou des filigranes ou pseudo-filigranes.

La structure diffusante, notamment la sous-structure intercalaire, peut s'étendre au niveau d'une partie de la structure multicouche dans une zone en regard du ou des filigranes ou pseudo-filigranes.

La structure diffusante, notamment la sous-structure intercalaire, peut ne s'étendre que sur une partie de la surface du ou des filigranes ou pseudo-filigranes, une partie du ou des filigranes ou pseudo-filigranes n'étant ainsi visible que depuis une face de la structure alors que la partie non recouverte par la sous-structure intercalaire est visible de part et d'autre de la structure en lumière transmise.

### Dispositif électronique

La structure multicouche selon l'invention comporte avantageusement au moins un dispositif électronique, de préférence au moins partiellement intégré à la structure diffusante, notamment lorsque celle-ci forme une sous-structure intercalaire. Dans ce cas notamment, la sous-structure intercalaire est encore appelé « inlay ».

Le dispositif électronique peut être choisi parmi les microcircuits intégrés à communication sans contact ou avec contact ou encore présentant les deux possibilités de communication avec et sans contact, les microcircuits à antenne intégrée sur une puce, les microcircuits résonnants, les microcircuits à communication par ondes électromagnétiques, les micro transpondeurs, les micro transpondeurs photo activables, notamment par un faisceau laser, et les micro transpondeurs réagissant à un faisceau de lumière, par exemple de lumière diffuse.

Le dispositif électronique peut être programmable ou non. Le dispositif électronique peut être à lecture seule ou à lecture/écriture.

Le dispositif peut résulter de l'association d'une puce avec au moins une antenne, dans le cas d'un système sans contact.

### Autres éléments de sécurité

La structure multicouche selon l'invention peut comporter, un ou plusieurs éléments de sécurité, choisis parmi les suivants, entre autres :
- des composants, colorants et/ou des pigments photochromes ou thermochromes, notamment sous forme imprimée ou mélangée à au moins une couche constitutive de la structure,
- un matériau spécifique collecteur de lumière, par exemple du type « guide d'ondes »,
- un film multicouche interférentiel,
- une structure à effets optiques variables à base de pigments interférentiels ou de cristaux liquides,
- une couche biréfringente ou polarisante,
- une structure de diffraction,
- une image embossée,
- des moyens produisant un "effet de moiré", un tel effet pouvant par exemple faire apparaître un motif produit par la superposition de deux éléments de sécurité sur l'article, par exemple par le rapprochement de lignes de deux éléments de sécurité,
- un élément réfractif partiellement réfléchissant,
- une grille lenticulaire transparente,
- une lentille, par exemple une loupe,
- un filtre coloré,
- un fil de sécurité incorporé par exemple dans la masse d'une au moins une couche constitutive de la structure ou en fenêtre, comportant éventuellement une impression imprimée en positif ou en négatif, un effet métallique, goniochromatique ou holographique, avec ou non une ou plusieurs parties démétallisées,
- un foil métallisé, goniochromatique ou holographique,
- une couche à effet optique variable à base de pigments interférentiels ou de cristaux liquides,
- un élément de sécurité plat et de format relativement petit tel qu'une planchette, visible ou non visible, avec ou sans dispositif électronique,
- des particules ou agglomérats de particules de pigments ou colorants de type HI-LITE, visibles ou non visibles,
- des fibres de sécurité, notamment métalliques, magnétiques (à magnétisme doux et/ou dur), ou diffusantes, ou excitables à la lumière,
une sécurité lisible automatiquement ayant des caractéristiques spécifiques d'absorption de la lumière, d'activité Raman, de magnétisme, d'interaction micro-ondes, d'interaction aux rayons X ou de conductivité électrique.

Selon un autre de ses aspects, l'invention a pour objet un document de sécurité incorporant une structure multicouche telle que définie précédemment.

Le document de sécurité peut comporter un livret.

Le document de sécurité peut constituer un document d'identité, notamment un passeport, un moyen de paiement, notamment un billet de banque, un bon d'achat, un chèque, un voucher ou une carte de crédit, un ticket d'accès à des manifestations culturelles ou sportives, un certificat d'authenticité, entre autres.

Selon un autre de ses aspects, l'invention a pour objet un procédé d'authentification d'un document ou d'une structure comportant les étapes suivantes :
en illuminant la structure avec une lumière susceptible d'exciter la luminescence des première et deuxième couches luminescentes:
   a) observation par réflexion de l'un au moins des premier et second éléments de sécurité, notamment filigranes ou pseudo-filigranes,
   b) observation sous cet éclairage, par transmission, de l'un au moins des premier et second éléments de sécurité, notamment filigranes ou pseudo-filigranes,
une information concernant l'authentification étant déterminée au moins en fonction de la comparaison des observations a) et b).

Le passage entre lumière réfléchie et lumière transmise peut se faire par retournement de la structure ou par changement du côté d'éclairage de la structure. On observe alors au moins un changement de couleur du filigrane observé.

En particulier, lorsqu'on retourne la structure, on observe successivement les premier et deuxième filigranes avec des couleurs différentes.

Lorsque le document comporte une structure multicouche comportant au moins une couche phosphorescente, le procédé peut comporter les étapes successives suivantes :
- éclairer la couche phosphorescente de la structure avec une lumière susceptible d'exciter la phosphorescence de ladite couche et observer le premier élément de sécurité, notamment filigrane ou pseudo-filigrane, avec la couleur de luminescence de la couche phosphorescente,
- arrêter l'éclairage et retourner la structure ou inversement, et observer un deuxième élément de sécurité, filigrane ou pseudo-filigrane avec la couleur de luminescence de la couche phosphorescente par rémanence de la phosphorescence.

Lorsque le document comporte une structure multicouche comportant deux couches fluorescentes, le procédé peut comporter les étapes suivantes :
- observer l'un au moins des éléments de sécurité, filigrane ou pseudo-filigrane, sur une des faces de la structure,
- éclairer successivement chacune des faces de la structure avec la lumière prédéfinie d'excitation de la fluorescence des première et deuxième couches,
- constater le changement de couleur d'illumination par luminescence desdits éléments de sécurité.

Dans une autre variante avec une structure multicouche telle que définie précédemment comportant deux couches fluorescentes, le procédé comporte les étapes suivantes :
- éclairer l'une des faces de la structure avec une lumière d'excitation de la fluorescence des première et deuxième couches luminescentes,
- retourner la structure et observer le changement de couleur du filigrane ou pseudo-filigrane.

Lorsque les filigranes ou pseudo-filigranes présentent des motifs différents on observe également le passage d'un motif à l'autre.

L'invention pourra être mieux comprise à la lecture de la description détaillée qui va suivre, d'exemples de mise en oeuvre non limitatifs de celle-ci, ainsi qu'à l'examen du dessin annexé, sur lequel :
- la figure 1 représente, en coupe éclatée, un exemple de structure selon l'invention,
- la figure 2 représente, en perspective, la face recto de la structure de la figure 1,
- la figure 3 représente, en perspective, la face verso de la structure de la figure 1,
- la figure 4 représente, en coupe, un autre exemple de structure selon l'invention
- la figure 5 représente, en vue de face, la face recto de la structure de la figure 4,
- la figure 6 représente, en vue de face, la face verso de la structure de la figure 4.
- la figure 7 représente, en coupe, un exemple de document selon l'invention,
- les figures 8 et 9 représentent, en perspective, différentes vues du document à volet de la figure 7,
- la figure 10 représente, en coupe, le détail X de la figure 8,
- la figure 11 représente un exemple de structure multicouche selon un autre exemple de mise en oeuvre de l'invention,
- les figures 12A à 12D illustrent l'observation de l'élément de sécurité de la figure 11 selon différentes conditions d'illumination,
- la figure 13 est une vue analogue à la figure 11 d'une variante de réalisation,
- les figures 14A à 14D illustrent l'observation de l'élément de sécurité de la figure 13 selon différentes conditions d'illumination,
- les figures 15A et 15B illustrent l'observation d'une variante de réalisation de document de sécurité selon l'invention sous différentes conditions d'éclairage, et
- la figure 16 représente un détail d'un exemple de structure multicouche selon un exemple de mise en oeuvre de l'invention.

Sur les figures, en particulier les coupes, les proportions réelles des éléments constitutifs n'ont pas toujours été respectées, dans un souci de clarté.

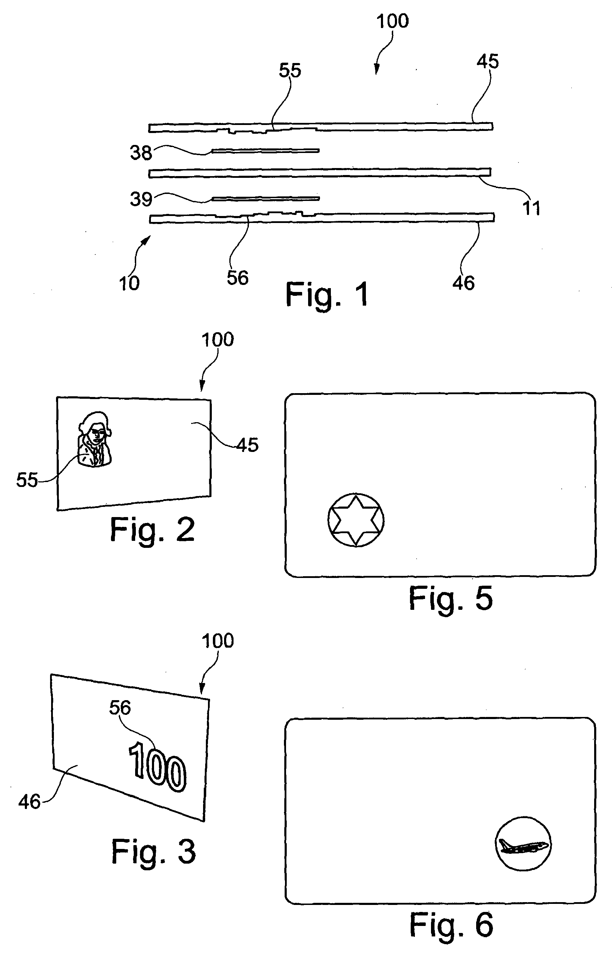

La structure 10 illustrée figure 1 comporte deux couches fibreuses 45 et 46 entre lesquelles est disposée une structure diffusante sous la forme d'une sous-structure intercalaire 11 qui est dans cet exemple entièrement translucide, de sorte que la région diffusante s'étend à l'ensemble de la structure diffusante. Les couches fibreuses 45 et 46 comportent des éléments de sécurité de niveau 1 sous forme de filigranes 55 et 56.

La structure 10 comporte une première couche luminescente 38 placée entre la sous-structure intercalaire 11 et la couche fibreuse 45, et une deuxième couche luminescente 39 placée entre la sous-structure intercalaire 11 et la couche fibreuse 46.

La structure 10 illustrée à la figure 1 constitue un document de sécurité 100 tel qu'un billet de banque. On a représenté sur la figure 2 le recto du document de sécurité 100 de la figure 1, le filigrane 55 reproduisant une image, par exemple le portait d'un personnage célèbre. Comme illustré sur la figure 3 le filigrane 56, visible sur le verso du document de sécurité 100 de la figure 1, reproduit un texte, en l'espèce la valeur nominative du billet de banque.

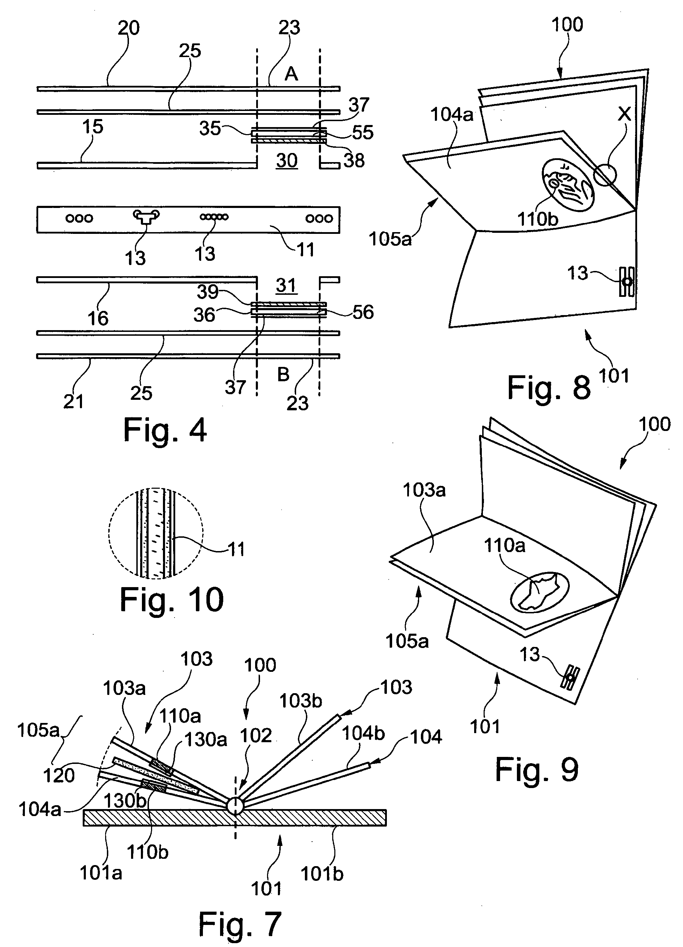

Dans l'exemple de la figure 4, la structure 10 selon l'invention comporte un patch papier 35 présentant un élément de sécurité constitué par un filigrane ou pseudo-filigrane 55, par exemple avec un motif « étoile », et un deuxième patch papier 36 présentant un élément de sécurité constitué par un filigrane ou pseudo-filigrane 56 avec un motif différent, par exemple un motif « avion ».

Le patch papier 35 est revêtu d'une couche fluorescente 38, de couleur verte sous lumière UV sur la face tournée vers la sous-structure intercalaire 11, et d'une couche d'adhésif 37 sur l'autre face.

Le patch papier 36 est également revêtu d'une couche fluorescente 39, de couleur rouge sous lumière UV, sur la face tournée vers la sous-structure 11, et d'une couche d'adhésif 37 sur l'autre face.

Les couches fluorescentes 38 et 39 sont de préférence, comme illustré, situées sur la face des patchs 35 et 36 tournée vers la sous-structure intercalaire 11, c'est-à-dire sous les filigranes 55 et 56 lorsque l'on regarde la structure 10, cela permet d'observer à la fois la couleur de la fluorescence et le filigrane qui est mis en évidence par la lumière émise par luminescence.

La structure 10 est par exemple une carte plate au format ID-1 d'épaisseur sensiblement constante, par exemple d'épaisseur égale à 760 µm +/- 80 µm répondant à la norme ISO-10373.

La structure 10 selon l'invention peut comporter au moins une couche ajourée 15 disposée d'un côté de la sous-structure intercalaire 11, mieux deux couches ajourées 15 et 16 disposées respectivement de part et d'autre de la sous-structure intercalaire 11, comme illustré sur la figure 4.

Des couches additionnelles peuvent être prévues entre les couches ajourées 15 et 16 et les faces externes 20 et 21 de la structure 10, afin par exemple de porter des impressions ou marquages laser.

Dans l'exemple illustré, ces couches additionnelles sont au nombre de deux de chaque côté de la sous-structure intercalaire 11, consistant en une couche externe transparente 23, de préférence en polycarbonate, d'épaisseur comprise entre 25 et 75 µm, par exemple d'environ 50 µm d'épaisseur, et une couche sous-jacente 25 marquable par laser, par exemple en polycarbonate également, d'épaisseur comprise entre 25 et 150 µm, par exemple 50 µm ou 100 µm environ.

Dans l'exemple illustré, les couches additionnelles 23 et 25 sont les mêmes du côté recto ou verso de la structure 10, mais les couches additionnelles 23 et 25 pourraient être différentes, par exemple de par leur nature, leur épaisseur et/ou leur aspect.

Les ajours 30 et 31 des couches ajourées 15 et 16 définissent des zones d'observation respectives A et B de chaque côté de la structure 10.

Les patchs papiers 35 et 36 sont disposés dans des ajours 30 des couches ajourées 15 et 16 et sont observables respectivement dans les zones A et B.

Les ajours 30 et 31 peuvent être de même forme dans les couches ajourées 15 et 16, par exemple être circulaires de diamètre d. La forme des ajours peut être autre, par exemple polygonale ou plus complexe.

Chaque patch 35 ou 36 peut être d'étendue légèrement supérieure à celle de l'ajour correspondant, de façon à recouvrir le bord de cet ajour. Dans l'exemple où le contour de l'ajour est circulaire de diamètre *d*, le patch peut être de diamètre D > d. L'écart entre D et *d* est par exemple compris entre 0,5 et 3 mm.

Les couches 15 et 16 sont de préférence non transparentes, étant par exemple opaques en polycarbonate blanc.

La sous-structure intercalaire 11 peut être réalisée avec une matière thermoplastique transparente, de préférence du polycarbonate, et l'épaisseur de la sous-structure intercalaire 11 est par exemple comprise entre 300 et 400 µm, par exemple de 350 µm environ. La sous-structure intercalaire 11 est translucide et diffusante, de façon à ce qu'un motif présent sur le patch 35 ne soit visible que du côté de la face 23, et réciproquement un motif visible sur le patch 36 ne soit visible que du côté de la face 21, du fait de la diffusion de la lumière à travers la sous-structure intercalaire 11.

Le caractère diffusant de la lumière de la sous-structure intercalaire 11, dans sa région diffusante, peut provenir de son indice de réfraction, de sa composition, de son épaisseur et/ou aussi de ses irrégularités de surface.

Selon un cas particulier, les irrégularités de surface de la sous-structure intercalaire 11 peuvent être obtenues par embossage ou grainage de cette surface.

Selon un autre cas particulier, la sous-structure intercalaire 11 comporte des cavités lui conférant un caractère diffusant, par exemple des bulles.

Selon un autre cas particulier, la sous-structure intercalaire comporte une charge diffusante choisie en particulier parmi les pigments minéraux, en particulier du kaolin ou du dioxyde de titane, et les pigments organiques, en particulier des billes de polystyrène ou de polyuréthane.

Il est intéressant que la région diffusante de la sous-structure intercalaire 11 soit translucide en présence de patchs portant chacun un filigrane ou pseudo filigrane, comme mentionné précédemment.

La structure 10 selon l'invention illustrée figure 4 comporte en outre à l'intérieur de la sous-structure intercalaire 11 un dispositif électronique 13, par exemple un dispositif d'identification à microcircuit intégré sans contact comme détaillé précédemment.

Dans l'exemple illustré la sous-structure intercalaire 11 (encore appelé inlay ou coeur) incorpore une antenne, de préférence filaire, qui peut être reliée au dispositif 13 ou couplée électromagnétiquement à celui-ci.

Le sous-structure intercalaire 11 peut être monocouche ou multicouche, étant mono ou multimatériau. De préférence, la sous-structure intercalaire 11 présente une épaisseur constante.

Dans l'exemple illustré, la structure 10 comporte un dispositif RFID sans contact noyé entièrement dans l'épaisseur de la sous-structure intercalaire 11 qui ne vient pas à affleurement de l'interface de la sous-structure intercalaire 11 avec les couches adjacentes de la structure.

La structure 10 permet d'observer sur sa face recto un filigrane en forme d'étoile comme illustré à la figure 5 alors que la face verso, illustrée à la figure 6, présente un filigrane avion.

La figure 7 représente un document de sécurité 100 conforme à l'invention comportant une couverture 101 définissant deux volets 101a et 101b reliés par une ligne de pliage 102.

Dans cet exemple, le document 100 comporte deux feuilles intérieures 103 et 104 liées entre elles au niveau de la ligne de pliage 102.

Chaque feuille intérieure 103 et 104 comporte une page intérieure 103a et 104a, portant chacune un filigrane ou pseudo-filigrane 110a et 110b recouvert d'une couche luminescente 130a et 130b, les deux pages 103a et 104a figurant d'un même côté de la ligne de pliage 102. De la sorte, les filigranes ou pseudo-filigranes 110a et 110b se superposent au moins partiellement. Ainsi, les filigranes ou pseudo-filigranes 110a et 110b sont portés par deux feuilles distincts 103 et 104 du document 100.

Le document 100 comporte une sous-structure intercalaire 120 située entre les pages intérieures 103a et 104a des feuilles intérieures 103 et 104 et superposable au moins en partie aux filigranes ou pseudo-filigranes 110a et 110b.

La page 103a et/ou la page 104a sont de façon optionnelle recouvertes d'une couche externe non représentée, notamment d'un film thermoplastique.

Sur la figure 7, la sous-structure intercalaire 120 présente une largeur inférieure à la largeur des pages 103a et 104a de telle sorte que le document 100 présente des zones de part et d'autre de la sous-structure intercalaire 120 pouvant éventuellement permettre un assemblage entre elles des couches fibreuses constituées par les pages intérieures 103a et 104a.

Dans une variante non illustrée, la sous-structure intercalaire 120 présente une largeur supérieure aux largeurs des pages intérieures 103a et 104a, et est positionnée entre les pages intérieures 103a et 104a de telle sorte que l'extrémité extérieure de la sous-structure 120 soit exactement superposée aux extrémités extérieures des pages intérieures 103a et 104a, et que l'extrémité intérieure de la sous-structure intercalaire 120, c'est-à-dire l'extrémité se situant au niveau de la ligne de pliage 102, soit fixée à la couverture 101 au niveau de la ligne de pliage 102, par exemple par collage ou couture.

Dans une autre variante, la sous-structure est également fixée par son extrémité intérieure à la couverture 101, en revanche ; l'extrémité extérieure de la sous-structure 120 ne se superpose pas aux extrémités extérieures des pages intérieures 103a et 104a.

Le document 100 comporte en outre un dispositif électronique 13 comme illustré figures 8 et 9, par exemple intégré à la couverture.

La figure 8 représente le côté recto de la page 104a sur lequel on constate que l'on observe uniquement en lumière transmise le filigrane 110b porté par la couche fibreuse formant la page 104a.

La figure 9 représente le côté verso de la page 103a sur lequel on constate que l'on ne peut observer en lumière transmise que le filigrane 110b porté par la couche fibreuse formant la page 104a.

En particulier les filigranes ou pseudo-filigranes peuvent être complémentaires. Ils peuvent être complémentaires dans leur effet visuel ou par rapport à un concept ou une image. On peut par exemple, dans le cas d'une structure selon l'invention, mettre comme premier filigrane ou pseudo-filigrane d'un côté un emblème national, une Marianne dans l'exemple illustré, et comme second filigrane ou pseudo-filigrane de l'autre côté, un autre emblème national différent du premier, une carte de France comme illustré à la figure 9, ou encore un texte.

Selon un autre exemple de réalisation non illustré, les deux filigranes ou pseudo-filigranes sont identiques mais placés de façon symétrique. Dans le cas d'une authentification, il peut alors être intéressant de vérifier cette identité entre les filigranes ou pseudo-filigranes sur les deux faces de la structure (par exemple un personnage regardant toujours du même côté).

Sur la figure 7, dans un souci de clarté, on a représenté de façon séparée les pages 103a et 104a, les couches luminescentes 130a et 130b et la sous-structure intercalaire 120 alors que dans ce mode de réalisation les pages 103a et 104a sont scellées entre elles pour former une seule feuille 105a, comme illustré sur les figures 8 et 9.

Les couches fibreuses formant les pages 103a et 104a peuvent être scellées à la sous-structure intercalaire 120 par le biais d'adhésif ou sans adhésif par fusion ou soudure.

Dans un exemple de mise en oeuvre, la sous-structure intercalaire 120 présente sur ses faces externes une couche polymère permettant son scellage direct à chaud et sous pression sur les couches fibreuses.

Dans un autre cas de mise en oeuvre, la sous-structure intercalaire peut présenter sur ses faces externes une couche polymère enduite d'un adhésif permettant son scellage direct à froid ou à chaud, avec ou sans pression sur les couches fibreuses. La couche polymère est par exemple en PET enduit d'EVA.

Dans un autre cas de mise en oeuvre, les deux couches fibreuses 103a et 104a présentent intrinsèquement sur leur surface intérieure en regard avec la sous-structure intercalaire, un surfaçage permettant leur scellage direct à chaud et sous pression sur la sous-structure intercalaire. Les couches fibreuses comportent par exemple un substrat en papier couché avec un latex thermoscellant.

Dans un autre cas de mise en oeuvre, les deux couches fibreuses présentent sur leur surface intérieure en regard avec la structure intercalaire, une couche adhésive permettant leur scellage direct à froid ou à chaud, avec ou sans pression, sur la structure intercalaire ; ces couches adhésives peuvent être des adhésifs liquides préalablement enduits à froid ou à chaud sur les faces intérieures des couches fibreuses.

Dans un autre exemple de mise en oeuvre, des couches d'adhésif, elles aussi non opaques et diffusantes optiquement sont utilisées pour assembler les couches fibreuses externes et la structure intercalaire, par exemple des films sensibles à la pression ou thermoplastiques. Les couches d'adhésif utilisées entre la couche fibreuse 45 et la sous-structure intercalaire 120 et entre la couche fibreuse 46 et la sous-structure intercalaire 11 pouvant être de nature différente. Les couches d'adhésif utilisées dans l'invention sont par exemple des couches d'adhésif PSA (pressure sensitive adhésive) notamment polyuréthane ou vinylique.

### Exemple 1

### Carte d'identité sans contact avec sécurité de type double filigrane

La structure correspond à celle illustrées aux figures 4 à 6.

La structure diffusante qui est ici une sous-structure intercalaire 11 et les couches 23 et 25 sont en polycarbonate (PC) translucide et les couches 15 et 16 en polycarbonate blanc, par exemple de 100 µm d'épaisseur. La sous-structure intercalaire 11 fait environ 350 µm d'épaisseur et les couches 23 et 25 font 50 µm d'épaisseur. Les UV passent à travers les couches PC translucides mais ils sont au moins en partie diffusés. Les UV ne passent pas à travers les couches de PC blanc qui sont opaques.

Les patchs 35 et 36 en papier sont filigranés et fabriqués sur une machine forme ronde. Le filigrane « étoile » du patch 35 est obtenu avec un galvano conventionnel et le filigrane « avion » du patch 36 est obtenu par la technologie filigrane tramé de la demanderesse, décrite dans la demande US 2001/0018113.

La carte finale a une épaisseur de l'ordre de 760 µm +/- 80 µm, répondant ainsi à la norme ISO10373. La carte est munie d'un système de communication sans contact répondant à la même norme ISO 10373.

La fabrication de la carte comporte les étapes suivantes :
- fabrication des papiers filigranés destinés à former les patchs 35 « étoile » et 36 « avion »,
- dépose de la couche fluorescente 38 de couleur verte sous lumière UV sur le papier filigrané « étoile » par impression hélio et de la couche fluorescente 39 de couleur rouge sur le papier « avion » ; la couleur est obtenue sous lumière UV et invisible sous lumière du jour,
- dépose de la couche d'adhésif 37, par exemple un polyuréthane ou un composé vinylique, dans les zones des filigranes des papiers,
- perforation à un diamètre *d* des deux couches de polycarbonate (PC) blanc 15 et 16,
- découpage des zones filigranées à un diamètre D pour former les patchs 35 et 36; D est de préférence légèrement supérieur à d, par exemple de l'ordre de 1 à 2 mm, afin de permettre un recouvrement parfait de la zone translucide,
- assemblage des patchs 35 et 36 au moyen de la couche d'adhésif 37 par compression à chaud à la couche de polycarbonate (PC) 25 correspondante, de sorte à ce que les patchs 35 et 36 soient disposés en regard des perforations couches de polycarbonate blanc 15 et 16, et de sorte à ce que les patchs 35 et 36 et la couche 25 correspondante soient solidarisés pour faciliter les étapes ultérieures pré-assemblage et de lamination,
- pré-assemblage des différentes couches constitutives de la carte, à savoir PC blanc, PC translucide avec patchs déposés préalablement par compression à chaud, sous-structure intercalaire,
- formation par ultrasons de points de fixation, ou par application d'un fer chaud, pour maintenir les couches empilées avant lamination, par exemple sur une machine SSH commercialisée par la société Muehlbauer.
- lamination à chaud sur une presse à laminer à une température d'environ 180°C pendant environ 20 min, la presse à plateau étant par exemple celle commercialisée par les sociétés Lauffer ou Burkle,
- découpe au format ID1 des cartes,
- personnalisation graphique de la carte, par une étape de marquage laser de la couche 25.

Les couches de PC blanc 15 et 16 et/ou les couches 23 et 25 peuvent être imprimées en offset et/ou sérigraphie avec une impression de sécurité, par exemple microtexte, encre UV, marqueur.

La personnalisation se fait carte à carte de préférence par gravure laser, par exemple sur une machine Datacard, sur la couche 25, marquable par laser. Alternativement, la personnalisation peut être faite par jet d'encre.

Dans une variante, au moins un des papiers filigranés destinés à former les patchs comporte une image cachée observable uniquement sous le rayonnement d'excitation. Lors de la fabrication du papier, un motif UV mono ou poly chromatique reproduisant le motif filigrané est déposé, en particulier au repère du filigrane, par impression d'une ou plusieurs couches fluorescentes de couleurs différentes sous lumière UV sur le papier filigrané; la ou les couleurs étant notamment obtenues uniquement sous lumière UV et invisibles sous lumière du jour. Après dépose de la couche d'adhésif, les zones filigranées sont découpées à un diamètre D pour former les patchs. Les dimensions du motif filigrané et le diamètre D sont de préférence choisis et les découpages réalisés pour que chaque patch comporte un seul motif filigrané et/ou un seul motif UV.

Lorsque l'on éclaire la carte de l'exemple 1 par une source ultraviolette côté verso, le filigrane observé côté recto est une étoile de couleur rouge alors que le filigrane observé côté verso est un filigrane avion de couleur rouge. En revanche, si l'on excite la couche intermédiaire fluorescente par une source ultraviolette émettant du côté recto de la carte, les filigranes observés seront respectivement une étoile de couleur verte côté recto et un avion de couleur vert côté verso.

Un effet intéressant est obtenu en observant un seul côté et en éclairant alternativement le recto et le verso ; on voit le filigrane correspondant changer de couleur. Par exemple, si l'on observe le recto et que l'on éclaire alternativement le recto et le verso on voit le filigrane en étoile changer de couleur.

Comme indiqué précédemment, il est avantageux quand la structure 10 comporte un filigrane porté par l'un au moins des patchs papier, que celui-ci se superpose au moins partiellement à une région translucide du reste de la structure, de telle sorte que le filigrane ne soit observable en lumière transmise à travers la structure que de la face de la structure adjacente au patch papier considéré. Lorsque la structure comporte deux patchs papier comportant chacun un filigrane ou pseudo-filigrane, celui-ci peut n'être observable en lumière transmise à travers la structure, à son niveau, que de la face de la structure adjacente au patch considéré. Ainsi, les observations des filigranes ou pseudo-filigranes se font de manière distincte à partir de faces respectives différentes de la structure. On obtient à la fois l'effet « Dual fluo » et l'effet « Dual watermark ».

### Exemple 2

### Passeport

Le document correspond à celui illustré aux figures 7 à 10.

Un passeport comprend un livret obtenu par la couture de doubles pages à l'intérieur d'une couverture. On entend par double page une feuille pliée en deux qui est cousue aux autres feuilles à l'aide d'un fil de couture.

Deux doubles feuilles 103 et 104 comprenant respectivement une première couche fibreuse 103a avec un premier filigrane 110a et une seconde couche fibreuse 104a avec un deuxième filigrane 110b sont assemblées avec une sous-structure intercalaire translucide et diffusante 120.

Une impression visible sous lumière UV ou IR est réalisée par flexographie sur les doubles pages du livret en même temps que les autres impressions de sécurité habituelles des pages VISA, par exemple de type offset, taille douce.

La couche fluorescente 130a émet par exemple une lumière bleue sous UV et la couche 130b une lumière rouge.

Lorsque l'on éclaire sous UV le recto de la page 105a et qu'on observe en réflexion le recto de cette page, on voit la carte de France sous fluorescence bleue et si l'on observe du côté verso en lumière transmise on la Marianne sous fluorescence bleue. Si l'on observe en réflexion sous UV le verso de la page 105a on voit la Marianne sous fluorescence rouge.

### Exemple 3

### Billet de banque multicouche

L'exemple correspond au mode de réalisation illustré aux figures 1 à 3.

Le billet de banque comporte une première couche 45 de matériaux fibreux, de l'ordre de 50µm d'épaisseur, à base principalement de coton, fabriquée sur une machine à forme ronde. Cette première couche 45 comporte un filigrane 55 « Beethoven » obtenu par la technique filigrane tramé et une première impression, s'étendant au moins partiellement dans la zone du filigrane 55, avec un colorant luminescent invisible à lumière du jour et de couleur verte sous lumière UV.

Le billet comporte une deuxième couche de matériaux fibreux 46 séparée de la couche 45 par une sous-structure intercalaire 11 translucide et diffusante d'épaisseur 30µm La sous-structure intercalaire comporte un polymère avec des cavitations, par exemple des bulles ou un film collecteur de lumière, par exemple du type « guide d'ondes », par exemple un film luminescent à base de polycarbonate commercialisé par la société BAYER sous la dénomination LISA^{®}, et comporte de part et d'autre de ses faces un adhésif activable à chaud et irréversible.

L'épaisseur de la couche fibreuse 56 est de l'ordre de 50µm. La couche 56, fabriquée sur une machine à forme ronde, est à base principalement de coton. Elle comporte un filigrane « 100 » obtenu en utilisant un « galvano » et une seconde impression 39 avec un colorant luminescent invisible sous lumière du jour et de couleur jaune sous lumière UV, l'impression s'étendant au moins partiellement dans la zone du filigrane 56. Les filigranes 55 et 56 se superposent.

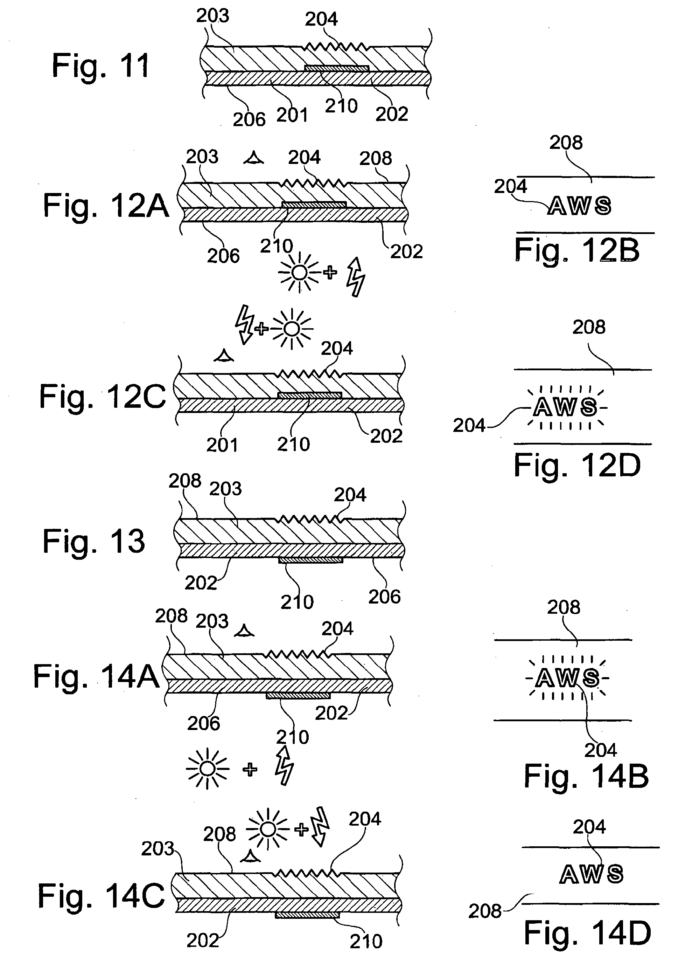

On a représenté à la figure 11 une structure multicouche qui peut former un document ou appartenir à un document. La structure comporte au moins les couches illustrées, à savoir une structure diffusante 201 présentant au moins une région diffusante 202, et par exemple entièrement diffusante sur toute son étendue. La structure 201 peut être identique à la structure 11 décrite précédemment, et constituer une sous-structure intercalaire.

La structure multicouche comporte également une couche 203, portant l'élément de sécurité 204 ; la couche 203 est par exemple une couche de papier et l'élément de sécurité 204 un filigrane.

Une couche luminescente 210 est disposée entre la structure 201 et l'élément de sécurité 204, étant par exemple déposée, notamment par impression, sur la structure 201 ou sur la couche 203.

La couche 203 est par exemple fixée par collage ou lamination sur la structure 201.

La couche luminescente 210 s'étend au moins partiellement entre la région diffusante 202 et l'élément de sécurité 204.

Lorsque la structure multicouche de la figure 11 est éclairée du côté de la face 206 opposée à l'élément de sécurité 204, comme illustré sur la figure 12A, par une lumière comportant une lumière visible (schématisée par un soleil) et une lumière d'excitation (schématisée par un éclair), la lumière visible diffuse à travers la structure 210 et rend l'élément de sécurité visible du côté de la face opposée 208, comme illustré à la figure 12B.

La lumière d'excitation est diffusée par la structure 201 et son intensité est suffisamment faible après traversée de la région 202 pour que la couche luminescente ne soit pas excitée ou l'être suffisamment peu pour que la lumière émise par luminescence ne change pas sensiblement l'aspect de l'élément de sécurité par rapport à une situation où la lumière du côté de la face 206 ne comporterait que la lumière visible.

Si la structure multicouche est observée en réflexion, comme illustré sur la figure 12C, par une lumière à la fois visible et d'excitation, cette dernière n'est pas diffusée par la structure 201 et peut exciter la couche luminescente 210 qui émet alors une lumière visible. L'élément de sécurité 204 change d'apparence, du fait de son illumination par la lumière émise par luminescence par la couche luminescente 210, comme illustré sur la figure 12D.

La structure multicouche illustrée à la figure 13 diffère celle décrite en référence à la figure 12 par l'emplacement de la couche luminescente 210, sur la face 206 et non à l'interface entre la structure 201 et la couche 203. Ainsi, la région diffusante 202 se situe au moins partiellement entre la région diffusante 202 et l'élément de sécurité 204.

Quand la structure multicouche est observée du côté de la face 208, et illuminée du côté de la face opposée 206, comme illustré à la figure 14A, par à la fois une lumière visible et une lumière d'excitation, la couche luminescente est excitée. La lumière colorée produite par excitation est suffisamment intense pour éclairer, après diffusion à travers la structure 201, l'élément de sécurité, lequel semble éclairé par une lumière colorée, pour l'observateur, comme illustré sur la figure 14B.

Lorsque la structure multicouche est observée en réflexion, et illuminée par la face en lumière visible et d'excitation, la lumière d'excitation est diffusée par la région 202 avant d'atteindre la couche luminescente 210. Cette dernière n'est pas ou très peu excitée, et l'élément de sécurité n'est pas éclairé par une lumière qui serait produite par la couche luminescente.

Dans des variantes, notamment des figures 11 et 13, la couche luminescente se confond au moins partiellement avec la couche 203, cette dernière étant par exemple un papier incorporant dans sa masse un agent fluorescent ou phosphorescent.

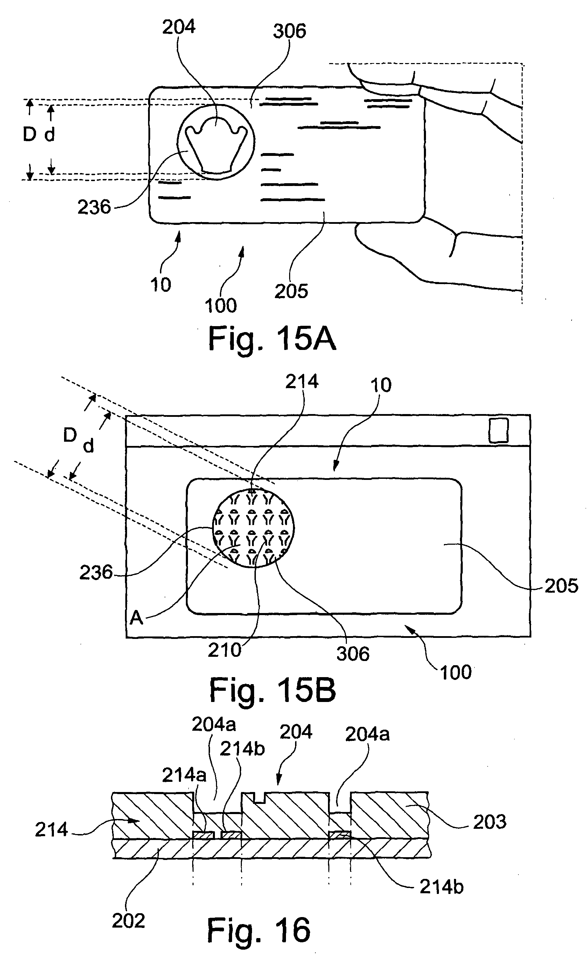

Le document de sécurité 100 sous forme de carte représenté aux figures 15A et 15B comporte une structure multicouche comportant au moins les couches illustrées à la figure 11.

Dans cette variante, la structure 10 comporte un patch papier 236, correspondant à la couche 203, portant l'élément de sécurité, par exemple un motif d'un filigrane ou pseudo filigrane 204. Le patch papier 236 est revêtu au revers du filigrane d'une couche fluorescente 210 comportant une impression monochromatique ou poly chromatique d'un motif reproduisant le motif filigrané, dans l'exemple illustré une reproduction réduite de couleur rouge sous lumière UV. La structure 10 comporte également une couche opaque et ajourée 205. Le patch 236 est disposé dans un ajour 306 de la couche ajourée 205. Le patch 236 formé d'un disque de diamètre D est par exemple, comme expliqué précédemment, d'étendue légèrement supérieure à celle de l'ajour 306 circulaire de diamètre *d*.

Les figures 15A et 15B montrent la carte du côté du filigrane ou pseudo filigrane 204. Sur la figure 15A, la carte est maintenue devant une source de lumière visible et le filigrane 204 est observé sous lumière transmise.

Sur la figure 15B, le document 100 est éclairé sous lumière UV. Seule est visible une zone d'observation A définie par l'ajour 306.

La lumière d'excitation n'est pas diffusée par la structure 201 et peut exciter la couche luminescente 210 qui émet alors une lumière rouge. Le motif 214 de la couche 210 devient visible et présente un réseau de reproductions du motif filigrané.

Le motif 214 de la première couche luminescente s'étend dans l'exemple entre le filigrane ou pseudo-filigrane 204 et la région diffusante 202.

Le motif 214 peut être disposé au repère du filigrane ou pseudo-filigrane 204, en particulier disposé de façon repérée par rapport à une zone claire 204a dudit filigrane ou pseudo-filigrane comme illustré figure 16. Les zones 214a et 214b du motif 214 de la couche luminescente peuvent émettre une lumière d'une même couleur. Dans une variante, les zones 214a et 214b correspondent à des formulations différentes afin de produire un motif d'ensemble poly chromatique.

Cet exemple de réalisation de document combine un élément de sécurité observable en lumière visible et une image cachée présente dans la couche fluorescente et observable lorsque le document est soumis à un rayonnement d'excitation prédéfini. Les deux observations dévoilent deux éléments reprenant le même motif ce qui facilite l'authentification à l'aide d'un tel dispositif. Un procédé d'authentification par un tel dispositif peut comporter les étapes suivantes :
- observer la structure du côté du premier élément de sécurité, en éclairant en lumière visible,
- observer du côté du premier élément de sécurité, la structure soumise au rayonnement d'excitation,
- générer une information concernant l'authenticité en comparant les aspects du premier élément de sécurité et de l'image cachée telle que révélée par le rayonnement d'excitation.

L'invention n'est pas limitée aux exemples de réalisation précédemment décrits, couvrant d'autres formes de filigrane, et d'autres couleurs des couches luminescentes.

En particulier, la structure diffusante, et notamment la sous-structure intercalaire, peut comporter une couche phosphorescente en remplacement de la couche fluorescente, ou comporter une couche fluorescente au recto et une couche phosphorescente au verso. Les composés luminescents peuvent l'être sous éclairage IR.

Dans certains exemples, les couches luminescentes se superposent exactement. En variante, l'une des couches luminescentes est plus large que l'autre. Néanmoins, cela ne permet pas d'observer deux couleurs de luminescence d'une face de la structure, car tout le rayonnement d'excitation (UV ou IR) est absorbé ou diffusé avant d'atteindre la seconde couche luminescente.

Le fait que l'une des couches luminescentes soit plus petite que l'autre peut permettre de voir une délimitation de cette couche par rapport à l'autre à cause de l'absorption. Si la région diffusante présente au moins un ajour, on pourra éventuellement observer les deux couleurs de luminescence simultanément, si l'une des couches luminescentes est plus large que l'autre et que sa lumière traverse ledit ajour.

L'expression « comportant un » doit se comprendre comme signifiant « comportant au moins un ».

## Revendications

1. Structure multicouche (1) comportant :
- un premier élément de sécurité, notamment un filigrane ou pseudo-filigrane (55, 110a ; 204),
- une structure diffusante (11 ; 201), comportant une région diffusante se superposant au moins partiellement au premier élément de sécurité,
- une première couche luminescente (38, 130a ;210) se superposant au moins partiellement au premier élément de sécurité et capable d'émettre, lorsqu'elle est soumise à un rayonnement d'excitation prédéfini, une lumière visible d'une première couleur (C1), la première couche luminescente s'étendant au moins partiellement entre le premier élément de sécurité et ladite structure diffusante ou la structure diffusante s'étendant au moins partiellement entre le premier élément de sécurité et la première couche luminescente,
**caractérisée en ce que** le premier élément de sécurité n'est observable en lumière transmise, à travers la structure, lorsqu'elle est soumise au rayonnement d'excitation prédéfini et/ou en lumière blanche, que de la face de la structure située du même côté que ce premier élément de sécurité.

2. Structure selon la revendication 1, la première couche luminescente étant au moins partiellement confondue avec une couche portant l'élément de sécurité.

3. Structure selon revendication 1, comportant en outre :
- un deuxième élément de sécurité, notamment un filigrane ou pseudo-filigrane (56, 110b), ladite région diffusante de la structure diffusante se superposant au moins partiellement au deuxième élément de sécurité,
- une deuxième couche luminescente (39, 130b) de formulation différente de la première, capable d'émettre, lorsqu'elle est soumise au rayonnement d'excitation prédéfini, une lumière visible d'une deuxième couleur (C2), différente de la première, la deuxième couche luminescente se superposant au moins partiellement au deuxième élément de sécurité, la structure diffusante étant située entre la première et la deuxième couche luminescente, les première et deuxième couches luminescentes étant de préférence situées entre les premier et deuxième éléments de sécurité,
chaque élément de sécurité n'étant observable en lumière transmise, à travers la structure, lorsqu'elle est soumise au rayonnement d'excitation prédéfini et/ou en lumière blanche, que de la face de la structure située du même côté que cet élément de sécurité.

4. Structure selon la revendication précédente, les premier et second éléments de sécurité et les première et deuxième couches luminescentes se superposant au moins partiellement, notamment exactement.

5. Structure selon l'une des revendications 3 et 4, les premier et second éléments de sécurité étant des filigranes.

6. Structure selon l'une quelconque des revendications précédentes, la première et/ou la deuxième couche luminescente étant sensiblement incolore en lumière blanche.

7. Structure selon l'une quelconque des revendications précédentes, la première et/ou la deuxième couche luminescente étant une couche fluorescente.

8. Structure selon l'une quelconque des revendications précédentes, la première et/ou la deuxième couche luminescente étant une couche phosphorescente.

9. Document de sécurité (100) incorporant une structure multicouche (10) selon l'une quelconque des revendications précédentes, ledit document comportant notamment un livret et/ou constituant au moins une partie d'un document d'identité notamment une carte d'identité ou un passeport, un moyen de paiement, notamment un billet de banque, un bon d'achat, un chèque, un voucher, une carte de crédit, un ticket d'accès à des manifestations culturelles ou sportives, ou un certificat d'authenticité.

10. Procédé d'authentification d'un document incorporant une structure multicouche (10) selon la revendication 3, comportant les étapes suivantes :
a) observation par réflexion de l'un au moins des premier et second éléments de sécurité, notamment filigranes ou pseudo-filigranes, en illuminant la structure avec une lumière correspondant au rayonnement d'excitation prédéfini,
b) observation sous cet éclairage, par transmission, de l'un au moins des premier et second éléments de sécurité, notamment filigranes ou pseudo-filigranes,
une information concernant l'authenticité étant déterminée au moins en fonction de la comparaison des observations a) et b).

11. Procédé d'authentification d'un document (100) incorporant une structure multicouche (10) selon la revendication 18, comportant les étapes suivantes :
- éclairer la couche phosphorescente de la structure avec une lumière susceptible d'exciter la phosphorescence de ladite couche et observer le premier élément de sécurité, notamment filigrane ou pseudo-filigrane, avec la couleur de luminescence de la couche phosphorescente,
- arrêter l'éclairage et retourner la structure ou inversement, et observer le deuxième élément de sécurité, notamment filigrane ou pseudo-filigrane, avec la couleur de luminescence de la couche phosphorescente.

12. Procédé d'authentification d'un document (100) incorporant une structure multicouche (10) selon la revendication 3, les première et deuxième couches luminescentes étant fluorescentes,
le procédé comportant les étapes suivantes :
- observer l'un au moins des éléments de sécurité, notamment filigrane ou pseudo-filigrane, sur l'une des faces de la structure,
- éclairer successivement chacune des faces de la structure avec la lumière prédéfinie d'excitation de la fluorescence des première et deuxième couches,
- constater le changement de couleur d'illumination par luminescence desdits éléments de sécurité.

13. Procédé d'authentification d'un document (100) incorporant une structure multicouche (10) selon la revendication 3, les première et deuxième couches luminescentes étant fluorescentes, comportant les étapes suivantes :
- éclairer l'une des faces de la structure avec une lumière d'excitation de la fluorescence des première et deuxième couches luminescentes,
- retourner la structure et observer le changement de couleur de luminescence au niveau des éléments de sécurité.

14. Procédé d'authentification d'une structure multicouche selon l'une quelconque des revendications 1 à 8, comportant les étapes suivantes :
- observer en transmission la structure en éclairant du côté opposé au premier élément de sécurité avec le rayonnement d'excitation et une lumière visible et en observant du côté du premier élément de sécurité,
- observer en réflexion la structure en éclairant du même côté que le premier élément de sécurité avec le rayonnement d'excitation et une lumière visible et en observant du côté du premier élément de sécurité,
- générer une information concernant l'authenticité en comparant les aspects du premier élément de sécurité sous les différentes conditions d'observation ci-dessus.

## Patentansprüche

1. Mehrschichtige Struktur (1), umfassend:
ein erstes Sicherheitselement, insbesondere ein Wasserzeichen oder Pseudo-Wasserzeichen (55, 110a; 204),
eine Diffusionsstruktur (11; 201), umfassend einen Diffusionsbereich, welcher zumindest teilweise dem ersten Sicherheitselement überlagert ist;
eine erste lumineszente Schicht (38, 130a; 210), welche zumindest teilweise dem ersten Sicherheitselement überlagert ist und dazu in der Lage ist, wenn sie einer vorgegebenen Anregungsstrahlung ausgesetzt ist, ein sichtbares Licht einer ersten Farbe (C1) zu emittieren, wobei die erste lumineszente Schicht sich zumindest teilweise zwischen dem ersten Sicherheitselement und der Diffusionsstruktur erstreckt oder die Diffusionsstruktur sich zumindest teilweise zwischen dem ersten Sicherheitselement und der ersten lumineszenten Schicht erstreckt,
**dadurch gekennzeichnet, dass** das erste Sicherheitselement im Durchlicht durch die Struktur hindurch nur von der Seite der Struktur, die auf der gleichen Seite wie das erste Sicherheitselement liegt, sichtbar ist, wenn sie der Bestrahlung mit der vorgegebenen Anregungsspannung und/oder mit weißem Licht ausgesetzt ist.

2. Struktur nach Anspruch 1, wobei die erste lumineszente Schicht zumindest teilweise auch eine Schicht ist, welche das Sicherheitselement trägt.

3. Struktur nach Anspruch 1, umfassend unter anderem:
ein zweites Sicherheitselement, insbesondere ein Wasserzeichen oder Pseudo-Wasserzeichen (56, 110b), wobei der Diffusionsbereich der Diffusionsstruktur dem zweiten Sicherheitselement zumindest teilweise überlagert ist,
eine zweite lumineszente Schicht (39, 130b) mit einer von der ersten unterschiedlichen Zusammensetzung, die in der Lage ist, wenn sie einer vorgegebenen Anregungsstrahlung ausgesetzt ist, ein sichtbares Licht einer zweiten Farbe (C2), die sich von der ersten unterscheidet, zu emittieren, wobei die zweite lumineszente Schicht zumindest teilweise dem zweiten Sicherheitselement überlagert ist und die Diffusionsstruktur zwischen der ersten und der zweiten lumineszenten Schicht angeordnet ist und die erste und zweite lumineszente Schicht vorzugsweise zwischen dem ersten und zweiten Sicherheitselement angeordnet ist,
wobei jedes der Sicherheitselemente im Durchlicht durch die Struktur hindurch, wenn sie einer Bestrahlung mit der vorgegebenen Anregungsstrahlung und/oder Weißlicht ausgesetzt ist, nur von der Seite der Struktur aus sichtbar ist, die auf der gleichen Seite wie das Sicherheitselement liegt.

4. Struktur nach dem vorhergehenden Anspruch, wobei das erste und zweite Sicherheitselement und die erste und zweite lumineszente Schicht sich zumindest teilweise, insbesondere exakt überlagern.

5. Struktur nach einem der Ansprüche 3 und 4, wobei das erste und zweite Sicherheitselement Wasserzeichen sind.

6. Struktur nach einem beliebigen der vorhergehenden Ansprüche, wobei die erste und/oder die zweite lumineszente Schicht in weißem Licht im Wesentlichen farblos sind.

7. Struktur nach einem der vorhergehenden Ansprüche, wobei die erste und/oder die zweite lumineszente Schicht eine fluoreszente Schicht ist.

8. Struktur nach einem der vorhergehenden Ansprüche, wobei die erste und/oder die zweite lumineszente Schicht eine phosphoreszente Schicht ist.

9. Sicherheitsdokument (100) umfassend eine Mehrschichtstruktur (10) nach einem der vorhergehenden Ansprüche, wobei das Dokument insbesondere ein Heft umfasst und/oder zumindest einen Teil eines Identitätsdokuments bildet, insbesondere eines Personalausweises oder Reisepasses, eines Zahlungsmit-tels, insbesondere einer Banknote, eines Einkaufsgutscheins, eines Schecks, eines Vouchers, einer Kreditkarte, einer Eintrittskarte für kulturelle oder sportliche Veranstaltungen oder eines Echtheitszertifikats.

10. Verfahren zur Authentifizierung eines Dokuments umfassend eine Mehrschichtstruktur (10) nach Anspruch 3, umfassend die folgenden Schritte:
a) Untersuchen von zumindest einem der ersten und zweiten Sicherheitselemente, insbesondere Wasserzeichen oder Pseudo-Wasserzeichen, durch Reflexion durch Bestrahlen der Struktur mit einem der vorgegebenen Anregungsstrahlung entsprechenden Licht,
b) Untersuchen des zumindest einen der ersten und zweiten Sicherheitselemente, insbesondere Wasserzeichen oder Pseudo-Wasserzeichen, bei dieser Beleuchtung durch Transmission,
wobei eine die Authentizität betreffende Information abhängig von einem Vergleich der Untersuchungen a) und b) ermittelt wird.

11. Verfahren zur Authentifizierung eines Dokuments (100) umfassend eine Mehrschichtstruktur (10) nach Anspruch 8, umfassend die folgenden Schritte:
Beleuchten der phosphoreszenten Schicht der Struktur mit einem Licht, welches die Phosphoreszenz dieser Schicht anregen kann, und Beobachten des ersten Sicherheitselements, insbesondere des Wasserzeichens oder Pseudo-Wasserzeichens, mit der Lumineszenzfarbe der phosphoreszenten Schicht,
Abbrechen der Beleuchtung und Umdrehen der Struktur oder Umstülpen und Beobachten des zweiten Sicherheitselements, insbesondere Wasserzeichens oder Pseudo-Wasserzeichens, mit der Lumineszenzfarbe der phosphoreszenten Schicht.

12. Verfahren zum Authentifizieren eines Dokuments (100), umfassend eine Mehrschichtstruktur (10) nach dem Anspruch 3, wobei die ersten und zweiten lumineszenten Schichten fluoreszent sind,
wobei das Verfahren die folgenden Schritte umfasst:
Beobachten von zumindest einem der Sicherheitselemente, insbesondere Wasserzeichens oder Pseudo-Wasserzeichens, auf einer der Seiten der Struktur,
nacheinander Beleuchten jeder der Seiten der Struktur mit dem vorgegebenen Anregungslicht der Fluoreszenz der ersten und zweiten Schicht,
Feststellen einer Änderung der Beleuchtungslichtfarbe der Lumineszenz der Sicherheitselemente.

13. Verfahren zum Authentifizieren eines Dokuments (100) umfassend eine Mehrschichtstruktur (10) nach Anspruch 3, wobei die ersten und zweiten lumineszenten Schichten fluoreszent sind, umfassend die folgenden Schritte:
Beleuchten einer der Seiten der Struktur mit einem Anregungslicht der Fluoreszenz der ersten und zweiten lumineszenten Schichten,
Umdrehen der Struktur und Beobachten einer Farbänderung der Lumineszenz bei den Sicherheitselementen.

14. Verfahren zum Authentifizieren einer Mehrschichtstruktur nach einem der Ansprüche 1 bis 8, umfassend die folgenden Schritte:
Untersuchen der Struktur im Durchlicht durch Beleuchtung der dem ersten Sicherheitselement gegenüberliegenden Seite mit der Anregungsstrahlung und einem sichtbaren Licht, wobei von der Seite des ersten Sicherheitselements aus beobachtet wird,
Untersuchen der Struktur unter Reflexion durch Beleuchten der gleichen Seite wie derjenigen des ersten Sicherheitselements mit der Anregungsstrahlung und sichtbarem Licht, wobei die Beobachtung von der Seite des ersten Sicherheitselements aus stattfindet,
Erzeugen einer die Authentizität betreffenden Information aufgrund eines Vergleichs der Ansichten des ersten Sicherheitselements unter den obengenannten verschiedenen Untersuchungsbedingungen.

## Claims

1. A multilayer structure (1) comprising:
- a first security element, notably a watermark or pseudo-watermark (55, 110a; 204),
- a diffusing structure (11; 201), comprising a diffusing region being at least partially superposed onto the first security element
- a first luminescent layer (38, 130a; 210) being at least partially superposed onto the first security element and capable of emitting, when it is subjected to a predefined type of exciting radiation, visible light of a first color (C1), the first luminescent layer extending at least partially between the first security element and said diffusing structure or the diffusing structure extending at least partially between the first security element and the first luminescent layer, **characterized in that** the first security element only being observable in transmitted light, through the structure, when it is subjected to the predefined type of exciting radiation and/or white light, from the face of the structure situated on the same side as this first security element.

2. The structure according to claim 1, the first luminescent layer being at least partially coincident with a layer carrying the security element.

3. The structure as claimed in claim 1, furthermore comprising:
- a second security element, notably a watermark or pseudo-watermark (56, 110b), said diffusing region of the diffusing structure being at least partially superposed onto the second security element,
- a second luminescent layer (39, 130b) with a different composition from the first, capable of emitting, when it is subjected to the predefined type of exciting radiation, visible light of a second color (C2), different from the first, the second luminescent layer being at least partially superposed onto the second security element, the diffusing structure being situated between the first and the second luminescent layer, the first and second luminescent layers being preferably situated between the first and second security elements, each security element only being observable in transmitted light, through the structure, when it is subjected to the predefined type of exciting radiation and/or white light, from the face of the structure situated on the same side as this security element.

4. The structure as claimed in the preceding claim, the first and second security elements and the first and second luminescent layers being at least partially superposed, notably being exactly superposed.

5. The structure as claimed in one of claims 3 and 4, the first and second security elements being watermarks.

6. The structure as claimed in one any of the preceding claims, the first and/or the second luminescent layer being substantially colorless in white light.

7. The structure as claimed in one any of the preceding claims, the first and/or the second luminescent layer being a fluorescent layer.

8. The structure as claimed in one any of the preceding claims, the first and/or the second luminescent layer being a phosphorescent layer.

9. A security document (100) incorporating a multilayer structure (10) as claimed in one any of the preceding claims, said document comprising notably a booklet and/or the security document constituting at least a part of an identity document, notably an identity card or a passport, a means of payment, notably a bank note, a coupon, a cheque, a voucher, a credit card, a ticket for access to cultural or sports events, or a certificate of authenticity.

10. A method for authenticating a document incorporating a multilayer structure as claimed in claim 3, comprising the following steps:
a) observation by reflection of at least one of the first and second security elements, notably watermarks or pseudo-watermarks, by illuminating the structure with a light corresponding to the predefined type of exciting radiation,
b) observation under this illumination, by transmission, of at least one of the first and second security elements, notably watermarks or pseudo-watermarks,
information relating to the authenticity being determined at least as a function of the comparison of the observations a) and b).

11. The method for authenticating a document (100) incorporating a multilayer structure (10) as claimed in claim 8, comprising the following steps:
- illuminate the phosphorescent layer of the structure with a light capable of exciting the phosphorescence of said layer and observe the first security element, notably a watermark or pseudo-watermark, with the color of luminescence of the phosphorescent layer,
- stop the illumination and turn the structure over or vice versa, and observe the second security element, notably a watermark or pseudo-watermark, with the color of luminescence of the phosphorescent layer.

12. The method for authenticating a document (100) incorporating a multilayer structure (10) as claimed in claim 3, the first and second luminescent layers being fluorescent, the method comprising the following steps:
- observe at least one of the security elements, notably a watermark or pseudo-watermark, on one of the faces of the structure,
- illuminate successively each of the faces of the structure with the predefined light for excitation of the fluorescence of the first and second layers,
- observe the change in color of illumination by luminescence of said security elements.

13. The method for authenticating a document (100) incorporating a multilayer structure (10) as claimed in claim 3, the first and second luminescent layers being fluorescent, comprising the following steps:
- illuminate one of the faces of the structure with a light for exciting the fluorescence of the first and second luminescent layers,
- turn the structure over and observe the change in color of luminescence of the security elements.

14. A method for authenticating a multilayer structure as claimed in any one of claims 1 to 8, comprising the following steps:
- observe the structure in transmission by illuminating from the side opposite to the first security element with the exciting radiation and visible light and by observing from the side of the first security element,
- observe the structure in reflection by illuminating from the same side as the first security element with the exciting radiation and visible light and by observing from the side of the first security element,
- generate information relating to the authenticity by comparing the aspects of the first security element under the various conditions of observation hereinabove.
